# EUROPEAN PATENT APPLICATION

(11) **EP 4 036 202 A1**
(43) Date of publication of application: **03.08.2022**
(21) Application number: 22154574.2
(22) Date of filing: 01.02.2022
(51) Int. Cl.: C12C 11/00, C12F 3/04, C12G 1/02

(54) **AN IMPROVED FERMENTATION APPARATUS PROVIDED WITH A TASTING SYSTEM**

(30) Priority: 02.02.2021 IT 202100002216
(71) Applicant: Trecieffe di Crosato Ivo & C. s.n.c., 31048 San Biagio di Callalta (TV) (IT); Universita' Degli Studi di Firenze, 50121 Firenze (IT)
(72) Inventor: PARENTI, Alessandro, 50143 Firenze (IT); GUERRINI, Lorenzo, 59015 Carmignano (PO) (IT); DASSIE, Giovanni, 31048 San Biagio di Callalta (TV) (IT)
(74) Representative: Soldatini, Andrea

(57) **Abstract**

The present invention is in the field of agri-food fermentations, in particular in the production of beverages by fermentation, and is particularly concerned with an apparatus for fermenting liquids having a reduced loss of volatile organic compounds that constitute aromas, which apparatus is improved with a condensate tasting system.

## Description

### Field of the invention

The present invention lies in the field of agri-food fermentations, and particularly relates to an improved apparatus for fermentation with reduced loss of aromas, which is particularly but not exclusively useful in the production of wine and beer.

### State of the Art

During fermentation processes, in particular alcoholic fermentations such as those for the production of wine or beer, or during some types of agri-food processing using gas, for example during adsorption and stripping operations, part of the volatile organic compounds, representing the aromas of the product being processed, fly away with the gas phase, in a manner that the product is eventually impoverished of these aromas. This loss is mostly due to the escape of carbon dioxide during fermentations or of the technical gas used in the other processes mentioned above, which carry the substances in question with them.

This phenomenon has been widely studied since the 1990s. For example, the article Mouret J.R. et al. (2014) "On-line based kinetics analysis of higher alcohols and ester synthesis during winemaking fermentations", Food Bioprocess Technology, 7: 1235-1245 describes a study based on the analysis of the gas and liquid phases during the fermentation of grapes for wine production and clearly highlights the loss of aromatic products in the gas phase produced by the fermenting mass.

A number of methods for the recovery of such aromatic products lost during fermentation have also been proposed in the literature. Although the aromatic products lost to the gas phase during alcoholic fermentations are not identified, these scientific articles propose to recover them by recondensing them outside the fermentation vessel, by cooling the gas which drags them out of the same. The compounds recovered in this way are added again to the fermenting mass and, by tasting the products before and after the addition, it was possible to demonstrate that for the organoleptic characteristics of the fermented product, the recovered aromas determined an important difference even in simple tasting. An example of such recovery systems for alcoholic fermentations in red wine production is described in the article by Bach H.P. (2001) "Recovery of fermentation aromas", Australian Journal of Grapegrower and Winemakers*.*

A fermentation system according to the known art is also that described by the Italian Patent publication 102016000122743. Said system includes a container having a single inner chamber adapted to receive and carry out the fermentation of a liquid mass in a lower portion thereof provided with at least one inlet for said liquid mass. The lower portion of the inner chamber is surmounted by an upper portion provided at the top with at least one outlet for gases developing from the fermenting mass. A cooling jacket is arranged at the upper portion and is configured to cool and condense fermentation vapours comprising gases and volatile organic compounds, and to let a condensate liquid with at least part of such volatile organic compounds fall into the fermenting mass, while non-condensed gases - essentially CO₂ - escape from the outlet.

In this way, it is possible to reduce the loss of volatile organic compounds which make up aromas and which tend to be dragged out of the fermenting mass by the carbon dioxide that developed during the process. Thus, a final product with a higher aromatic component of volatile organic compounds is obtained thanks to their reduced loss by recondensation prior to the escape from the apparatus and fall into the fermenting mass.

Starting from this reference of the state of the art, the present applicants have created an improvement which through original equipment, is able to further and significantly increase the usability and the advantages of the previously known system.

### Summary of the invention

The fermentation apparatus thus improved according to the invention, which is particularly but not exclusively intended for use in the production of beverages, particularly wine, has the essential features defined by the independent claim appended hereto. Other advantageous features of specific embodiments of the invention are the subject of the secondary claims.

### Brief description of the drawings

The features and advantages of the improved fermentation apparatus according to the present invention will become apparent from the following description of embodiments thereof, provided by way of non-limiting example with reference to the attached drawings, wherein:
- figure 1 is an axonometric view of an apparatus according to the present invention, in a first embodiment;
- figure 2 is a side view of the apparatus in figure 1;
- figure 3 is a front view of a tasting device which, according to the first embodiment of the invention, is provided in the apparatus of the previous figures and is shown here in isolation;
- figure 4 is a cross-sectional view of the device in figure 3, taken along plane IV-IV;
- figure 5 schematically represents an axonometric view of an upper part of an apparatus having a conceptually basic structure according to that of figures 1 and 2, albeit modified to incorporate a tasting device according to a second embodiment of the invention;
- figure 6 is an exploded view of the device in figure 5, again in axonometric view;
- figure 7 is a top view of the device in the second embodiment;
- figure 8 is a section taken along plane VIII-VIII of figure 7;
- figure 9 is a side view of an apparatus according to the invention, in a third embodiment; and
- figure 10 is a sectional view of the apparatus in figure 9, taken along plane X-X.

### Detailed description of the invention

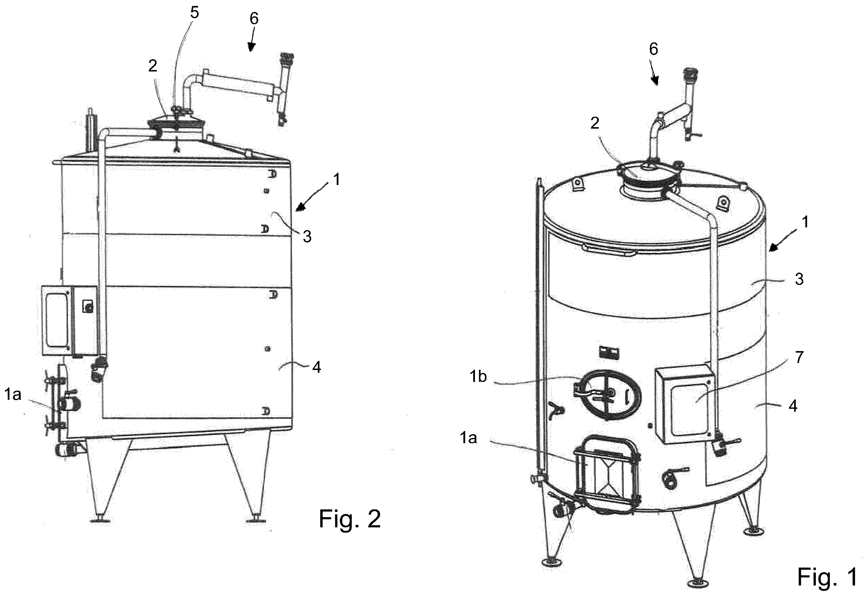

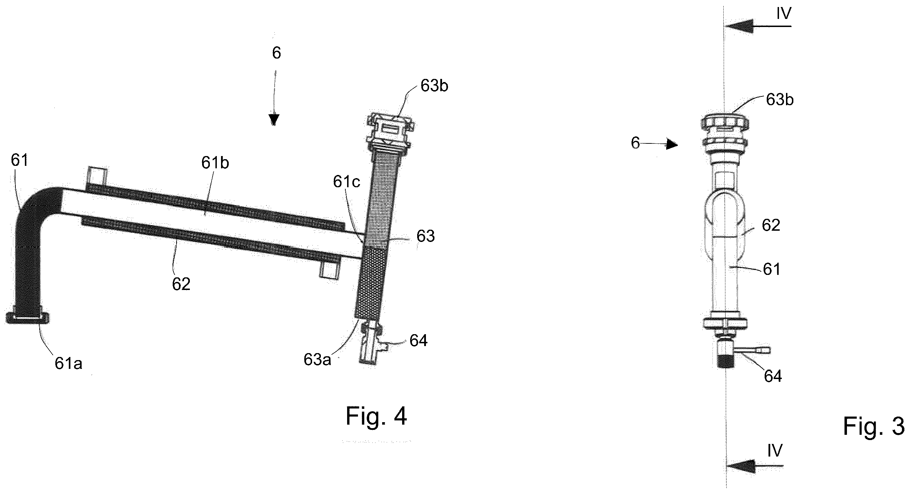

Referring for the moment only to figures 1 to 4, an apparatus according to the invention provides a basic structure conceptually consistent with that of the apparatus disclosed by the already mentioned publication 102016000122743, with a container 1 having a single inner chamber adapted to receive and carry out the fermentation of a liquid mass. The container, equipped with loading/unloading and inspection hatches 1b, 1c, is fitted at the top with an outlet section 2 for the gases which develop during fermentation and, at least in an elevated or upper region, with a primary cooling jacket 3 adapted to condense the fermentation vapours and let them fall downwards into the fermenting mass. The cooling jacket 3 will typically be able to utilize the circulation - within itself - of a coolant, such as an aqueous solution of ethylene glycol or other known coolant suitable for use in the food industry, supplied via a circuit not shown and itself having obvious configuration.

More specifically, during fermentation, fermentation vapors comprising gases and volatile organic compounds continuously develop from the liquid mass and rise upwards, where they find the cooled region, which lets a condensate liquid with the volatile organic compounds (substances that determine the aroma of the final product) fall into the fermenting mass, while the gaseous component escapes from the outlet section 2. Again according to the known technology, the apparatus advantageously includes an additional secondary jacket 4 - fed by the same circuit as the main jacket 3 and arranged at a lower level - for temperature control and regulation during fermentation. In addition, there is advantageously provided at least one probe 5 for measuring the temperature at the gas outlet 2, and means for regulating the flow rate at least of the fluid entering the cooling jacket 3, all controlled by a control system (of which a control panel 7 is depicted) so that a variation of the flow rate of the fluid in the cooling jacket, and thus an adjustment of the cooling power of the jacket itself, can be implemented as a function of the value detected in the gases at the outlet 2 by the at least one sensor (temperature or also other sensor, for example flow rate sensor). With this known control system it is possible for example to control condensation in relation to temperature in order to optimize or select the recovery of specific volatile aromas dragged upwards by the fermentation vapors.

According to the invention, there is provided to equip the apparatus with a dispensing device 6 for extracting and then tasting the condensate, in this case associated with the outlet section 2. In this embodiment, the device 6 includes a pipe 61, of which the inlet 61a, connected to the outlet section 2, receives carbon dioxide which, although depleted of volatile organic compounds according to the system just described, still carries a certain non-negligible amount of it. The pipe 61, typically L-shaped, is covered for a segment 61b by its own auxiliary cooling jacket 62 advantageously fed by a circuit that can be controlled independently form the one in charge of feeding the main cooling jacket 3 and the possible other jacket 4 of the container 1 (albeit making use of a common exchanger).

The segment 61b has a certain downward slope from the end near to the inlet 61a so that at least a further fraction of the condensate that tends to precipitate downwards may flow - by the same condensation mechanism previously described and promoted herein by the auxiliary cooling jacket 62 - past an outlet end 61c into a discharge tube 63 arranged downstream of the same segment and having an orientation of verticality or substantially close to verticality. The discharge tube 63 is closed at a lower end 63a by a valve 64, which by maneuvering, can dispense the further fraction of condensate deposited therein by falling from the cooled segment, while the upper end 63b allows the CO₂, further depleted of its aromatic content, to escape.

The sensorial (taste, smell, appearance) or even analytical evaluation of this fraction of condensates provides the winemaker with important additional opportunities as compared to the apparatus in its already known basic form. In particular, this fraction, which tends to have more concentrated aromas than the fermenting mass, is representative of the phenomena which are taking place inside this mass. The higher concentration allows the perception thresholds of the single compounds to be overcome in a shorter time and ultimately allows the winemaker/technician to take in advance some decisions about the management of the fermenting mass, also in order to personalize his or her products, thus making them more distinguishable. In particular, condensates will be different according to the quality of the product being fermented, its characteristics (for example, grape cultivars), the yeasts used, the technical conditions chosen, the time of alcoholic fermentation and the temperatures chosen for condensation. With the tasting system envisaged here, it is therefore possible to create an archive of experiences aimed at finding the most appropriate solutions and operating settings for the production target sought.

From this point of view, in addition to allowing the tasting of the condensates, in some configurations, according to the invention, it is also envisaged for the device intended for this purpose to allow the re-introduction of said condensates into the must, further improving and increasing the control options of the obtainable product by the company personnel.

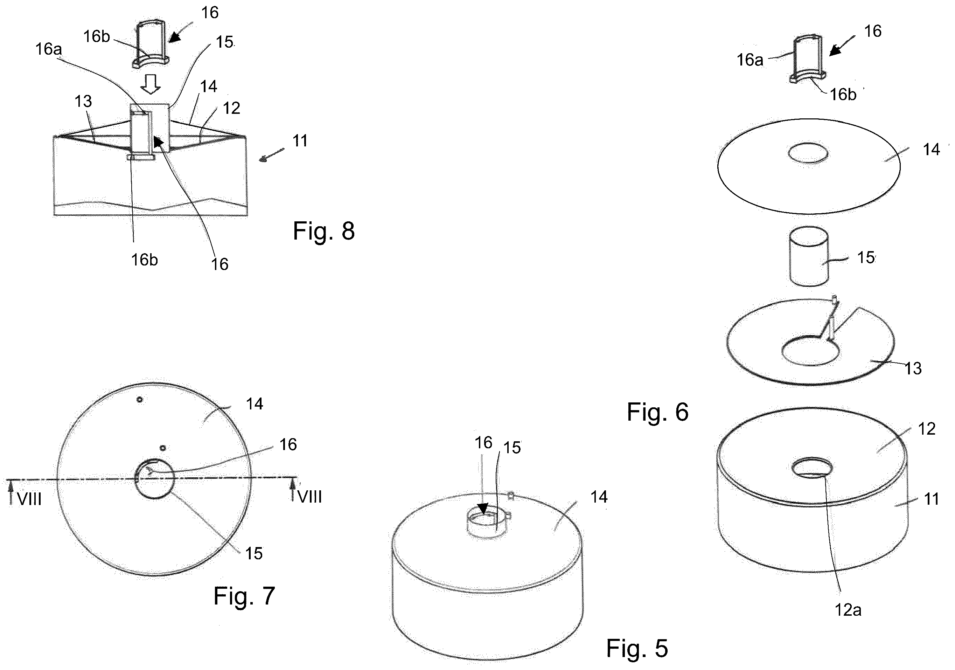

This specific additional functionality, which can in principle also be implemented with the first embodiment, is particularly intended for the second embodiment of the invention shown in figures 5 to 8. According to such an embodiment, the main container, indicated herein by 11 and shown schematically, has a roof 12 having a concave shape, e.g., a conical surface, with an upwards facing concavity, and is annularly developed around a large central hole 12a for the passage of fermentation gases. The roof 12 is covered with a cooling jacket 13 and is surmounted by a counter-roof covering 14 for example, having an opposite concavity to that of the roof 12. A chimney 15 rises from the roof 12, and specifically from the inner perimeter delimiting the hole 12a, and projects above the counter-roof 14. The upper end of the chimney 15, which is suitably equipped with closure means (not shown), defines the outlet of the CO₂.

A condensate extractor 16 is removably supported by the chimney 15, for example attached near its upper edge through a frame 16a. The lower end of the latter provides a tray 16b, for example developed along an circumferential arc and adapted to become positioned below the inner perimeter of the roof 12, and thus the edge of the hole 12a. In this way, the tray is adapted to collect the condensate fraction flowing from the roof by the action of the cooling jacket. The condensate thus collected, and extracted by releasing the frame 16a (as shown in figure 8) from chimney 15, can be evaluated/tasted and eventually re-introduced (also with controlled dosing) through the hole 12a into the fermenting mass inside the container 11. It is clear with this solution that a part of the condensate resulting from the primary condensation is directly tasted (the jacket 13 acts in this case as the primary jacket) without performing recondensation with an auxiliary cooling jacket, as in the case of the first embodiment.

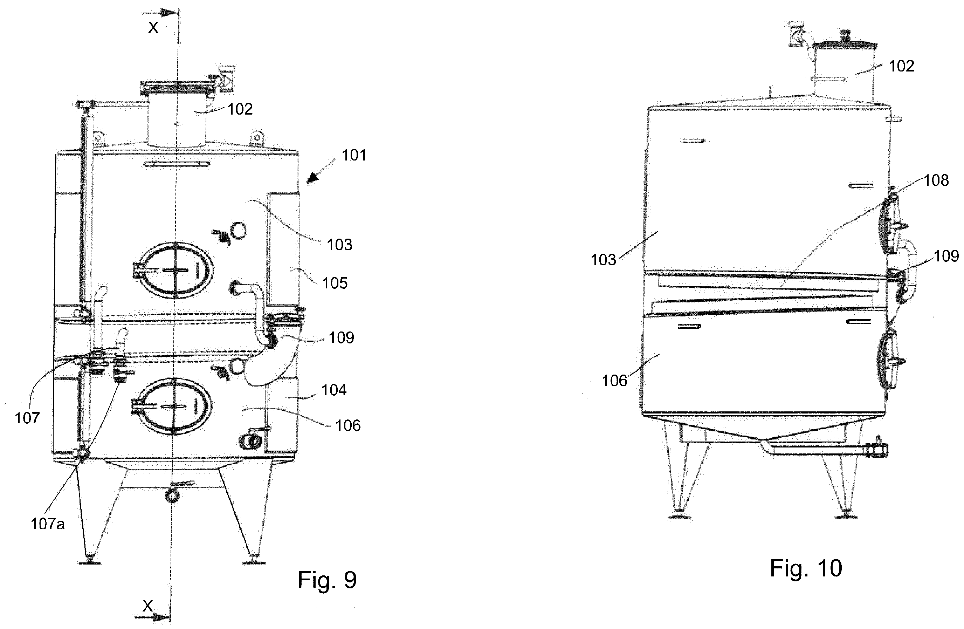

A further embodiment, shown in figures 9 and 10, provides for the container 101 to be divided into two superimposed cells, a lower cell 106 and an upper cell 103 separated by a diaphragm 108 that segments the interior of the container and has an arrangement with a certain inclination with respect to the horizontal. The lower cell 106 and the upper cell 103 are affected by respective cooling jackets 104, 105, and the two cells are connected by an external bypass 108 for the passage of gaseous fermentation products from the mass that is fed to occupy the lower cell 106.

A drain duct 107 provided with a tap 107a equips the upper cell 103 at the lowest region of the diaphragm 108 so as to be usable for the extraction, by gravity, of a fraction of the residual condensates deposited on the bottom of the cell, namely on the same diaphragm 108, again under the effect of the cooling system 105 acting on the gaseous fermentation flow that ascended through the bypass 109. Similarly to the first embodiment, the fermenting mass is therefore the object of a primary and main recovery of condensates, in this case in the lower cell 106 which constitutes the real fermentation chamber, due to its own primary jacket 104, and then of a new condensation that allows the extraction, for its tasting, of at least a fraction of the residual aromatic substances remaining in a concentrated form in the gaseous flow. In any case, the CO₂ will eventually be discharged from an outlet 102 on the roof of the upper cell 103.

As already mentioned, the container, for example made of stainless steel, in a single or double cell, will be equipped with appropriate hatches for access to the inside (for the introduction and extraction of the mass to be fermented, cleaning, maintenance, etc.) as well as with the circuit, safety (valves), control (probes, sensors, level indicators, ducts for reassembly) elements, some of which are visible in the drawings and, where not mentioned in this description, to be understood as obviously provided in steel wine vases on the basis of what is well known to the expert in the field, without strict relevance to the object of the present invention.

The application of this apparatus is particularly useful in the production of alcoholic beverages, such as wine or beer, but also in the production of any other beverage produced by fermentation, such as sake, cider, mead, and the like. Having said this, the apparatus of the present invention can be used - again in the agri-food sector - in other processes for processing liquid masses in which however, there is always the presence of gases which drag the volatile organic compounds contributing to the aromas with them towards the top of the container.

The fermentation vapors will be cooled at temperatures such as to recondense at least part of the volatile compounds present, such a temperature being typically between -5°C and 15°C, and more frequently between -1°C and 5°C, choosing each time the most suitable temperature values depending on the temperature of the vapors originating from the fermenting mass and on their flow rate, as well as on the type of the part of volatile organic compounds to be recondensed, such choice being favoured or suggested also by the possibility of tasting the condensates provided by this equipment.

According to the invention, it is therefore permitted to taste the aromas being condensed and recovered/retained within the fermenting product. Representing, in particular, a concentrate thereof, their evaluation is of extreme interest in order to evaluate their type and quality in order to use them as a decisional tool to direct fermentation in the most adequate way according to oenological expectations. Moreover, at least in some of the embodiments, the invention also allows to decide in real time (i.e. during fermentation) whether to re-introduce the condensate into the fermenting must or to discard it. This management can also be different at different times of fermentation and for the different temperatures set as the condensation point.

The present invention has been described hereto with reference to preferred embodiments thereof. It is to be understood that other embodiments may exist which relate to the same inventive core within the scope of protection of the attached claims.

## Claims

1. An apparatus for the fermentation of a liquid mass comprising volatile organic compounds, said apparatus comprising a container (1) having at least one inner chamber adapted to receive and carry out the fermentation of said liquid mass and provided with at least one loading/unloading hatch for said liquid mass, said container (1) being provided with at least one outlet (2) for the gases coming out of said mass under fermentation and further comprising cooling means (3) at least at an elevated portion of said container (1), adapted to cool and condense fermentation vapors comprising gases and volatile organic compounds, and to let a condensate liquid with at least part of said volatile organic compounds fall downwards, in one or more stages upstream of said outlet (2), the apparatus being **characterized in that** it further comprises collection and extraction means (6) for collecting and extracting at least a fraction of said condensate liquid from said container.

2. The apparatus according to claim 1, wherein said collection and extraction means comprise a dispensing device (6) arranged downstream of said outlet (2) of said container (1).

3. The apparatus according to claim 2, wherein said dispensing device (6) comprises: a pipe (61) having an inlet end (61a) connected to said outlet (2) of said container, and an outlet end (61c) shut by dispensing means (63, 64); and an auxiliary coolant jacket (62) at least partially covering said pipe (61).

4. The apparatus according to claim 3, wherein said auxiliary coolant jacket (62) is fed by an auxiliary cooling circuit controlled in an independent manner from a main circuit feeding said cooling means (3) of said container (1).

5. The apparatus according to claim 3 or 4, wherein said pipe (61) comprises a segment (61b) covered by said auxiliary cooling jacket (62) arranged at a certain downward slope starting from a region adjacent to said inlet end (61a), thereby said fraction of said condensate liquid tends to precipitate downwards due to the condensation promoted by said auxiliary cooling jacket (62) and flows past said outlet end (61c) to said dispensing means (63, 64), the latter comprising a discharge tube (63), arranged in communication with, and downstream of, said segment (61b) and having an orientation of verticality or substantially close to verticality, being closed at a lower end (63a) by a valve (64), adapted to be operated to extract said fraction of condensate liquid, while an upper end (63b) of said discharge tube allows the gaseous flow to exit.

6. The apparatus according to claim 1, wherein said collection and extraction means comprise: a roof (12) of said container (11) having at least one concave-shaped portion, said concave portion facing upwards and anularly developed around a bore (12a) for the passage of fermentation vapors; a cooling jacket (13) covering said concave-shaped portion and materializing said cooling means; at least one chimney (15) rising from the inner perimeter of the roof bordering said hole (12a) materializing said outlet; and extraction means (16) reversibly engaged with said chimney (15) and comprising collection means (16b) configured to collect said fraction of condensate liquid leaking from the roof by the action of said cooling jacket (13).

7. The apparatus according to claim 6, wherein said extraction means (16) comprise a frame (16a) removably engaged with said chimney (15), and said collection means comprise at least one tray (16b) connected to a lower end of said frame (16a) and configured for disposition below the edge of said bore (12a).

8. The apparatus according to claim 7, wherein said tray (16b) develops according to a circumferential arc.

9. The apparatus according to any of the claims 6 to 8, wherein said concave portion of said roof (12) has a conical surface.

10. The apparatus according to any of the claims 6 to 9, wherein said conical portion is surmounted by a counter-roof covering (14), e.g., having a concavity opposite that of said roof (12), crossed by said chimney (15).

11. The apparatus according to claim 1, wherein said collection and extraction means comprise: a subdivision of said container (101), by means of an inclined diaphragm (108), into a lower cell (106) and a upper cell (103); said cooling means (104, 105) arranged both at said lower cell (106) and at said upper cell (103); a bypass (105) connecting said cells for the passage of said fermentation vapors of said fermenting mass arranged in said lower cell (106); at least a drain duct (107) provided with a tap (107a) equipping said upper cell (103) in correspondence with a lower height region of said diaphragm (108), thereby said drain duct (107) is adapted to be used for the extraction, by gravity, of said fraction of condensate liquid, deposited on said diaphragm (108).

12. The apparatus according to claim 11, wherein said gas outlet is formed in a roof of said upper cell (103).
